(19) Europäisches Patentamt
European Patent Office
Office européen des brevets

(11) **EP 2 372 321 B1**

(12) **EUROPÄISCHE PATENTSCHRIFT**

(45) Veröffentlichungstag und Bekanntmachung des Hinweises auf die Patenterteilung:
**07.11.2012 Patentblatt 2012/45**

(51) Int Cl.:
*G01G 11/00* (2006.01)     *G01G 13/00* (2006.01)
*G01G 17/00* (2006.01)

(21) Anmeldenummer: **10154505.1**

(22) Anmeldetag: **24.02.2010**

(54) **Verfahren und Vorrichtung zum Füllen von Zielbehältern**

Method and device for filling target containers

Procédé et dispositif destinés au remplissage de récipients cibles

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**05.10.2011 Patentblatt 2011/40**

(73) Patentinhaber: **Mettler-Toledo AG**
**8606 Greifensee (CH)**

(72) Erfinder:
• **Frei, Pascal**
  **8645, Rapperswil (CH)**
• **Schuster, Guido**
  **8712, Stäfa (CH)**

(56) Entgegenhaltungen:
**EP-A1- 2 124 025     EP-A1- 2 159 555**
**DE-A1- 3 910 028**

**Beschreibung**

Die vorliegende Erfindung bezieht sich auf ein Verfahren und eine Vorrichtung zum Füllen von Zielgefässen mit einer vorbestimmten Zielmasse einer fliessfähigen Substanz aus einem Reservoir.

Solche Füllvorrichtungen finden insbesondere beim Dosieren kleiner Mengen, wie sie beispielsweise im Pharmabereich notwendig sind ihre Verwendung. Häufig sind solche Zielgefässe auf einer Waage platziert, um die Menge der aus der Dosiervorrichtung ausgetragenen Substanz zu verwiegen, so dass sie anschliessend bestimmungsgemäss weiter verarbeitet werden kann.

Die zu dosierende Substanz befindet sich beispielsweise in einem Entnahmegefäss bzw. Reservoir, welches einen Dosierkopf aufweist. Dabei ist es wünschenswert, die zu dosierende Substanz durch eine Öffnung der Dosiervorrichtung auszutragen, so dass sich am Ende des Füllvorgangs eine vorbestimmte Zielmasse im Zielgefäss befindet. Dabei ist wichtig, dass die tatsächlich im Zielgefäss befindende Masse möglichst genau der vorbestimmten Zielmasse entspricht. Des Weiteren ist wichtig, dass der Abfüllvorgang möglichst schnell durchgeführt werden kann.

Aus dem Stand der Technik sind Dosierverfahren bekannt, die auf einer volumetrischen Messung der ausgetragen Substanz basieren. Für eine Substanz mit der Dichte $p$ und einem variablen Öffnungsquerschnitt des Ventils A und damit resultierender Austragsgeschwindigkeit $u$ der Substanz ergibt sich die Masse $m_2$ der im Zielgefäss befindenden Substanz aus:

$$m_z = \int_{t_{auf}}^{t_{zu}} \dot{m}(t)dt = \int_{t_{auf}}^{t_{zu}} \rho \dot{V}(t)dt = \int_{t_{auf}}^{t_{zu}} \rho(Au)(t)dt = \int_{t_{auf}}^{t_{zu}} \rho A(t)u(A,h,d,...)dt$$

Besonders die Austraggeschwindigkeit $u$ unterliegt vielen Einflussfaktoren, wie beispielsweise der freien Fläche A des Ventils, dem aus der Füllstandshöhe h der im Reservoir befindender Substanz resultierenden hydrostatischen Druck und den rheologischen Eigenschaften der Substanz, wie beispielsweise der Korngrösse d des Pulvers. Vor allem die rheologischen Eigenschaften sind oft sehr komplex und unterliegen Einflussfaktoren, die nicht genauer bekannt sind. Beispielsweise ist es schwierig die bei Binghamschen Medien oder Pulvern auftretende Fliessverzögerung zu Beginn des Fliessprozesses zu berücksichtigen. Insbesondere beim Abfüllen pulverförmiger Substanzen spielen Faktoren wie beispielsweise Korngrösse, Feuchtegehalt und Oberflächenbeschaffenheit der einzelnen Körner eine grosse Rolle.

US 4893262 offenbart ein Kontrollsystem zum Befüllen von Behältern. Über verschiedene Abfüllzyklen wird dabei das System optimiert, in dem der Massenstrom von Zyklus zu Zyklus optimiert und die Abfüllzeit so lange angepasst wird bis die abgefüllte Masse möglichst genau der vorbestimmten Zielmasse entspricht. Dieses System wird hauptsächlich für das Abfüllen grosser Menge verwendet, die hinsichtlich Genauigkeit wesentlich niedrigere Anforderungen stellen als das erfindungsgemässe System. Ein weiteres Problem stellt die Optimierung über verschiedene Zyklen dar, da die vorbestimmte Ziel masse erst nach einigen Probezyklen tatsächlich in der notwendigen Genauigkeit erreicht wird. Die während dieser Probezyklen ausgetragene Substanz kann nicht weiterverwendet werden, da sie durch den Austragungsprozess und dem Entfernen aus dem Zielgefäss verunreinigt werden könnte. Gerade beim Abfüllen von teuren Substanzen stellt dies ein entscheidender Nachteil dar.

US 6987228 B1 offenbart eine Methode und eine Vorrichtung zum genauen und reproduzierbaren Abfüllen einer kleinen Masse von Partikeln. Die Vorrichtung weist eine Steuereinheit zur Steuerung des Energieauftrags auf ein Sieb in welchem sich die auszutragenden Partikel befinden, auf. Der Energieauftrag bewirkt, dass eine kleine Masse der im Sieb befindenden Partikel auf eine unter dem Sieb angeordnete Waage fallen. Auf Grund des von der Waage gemessenen Gewichts wird von der Steuereinheit der Energieauftrag auf das Sieb gesteuert. Der Betrag der aufgetragenen Energie kann dabei in Abhängigkeit von der noch auszutragenden Masse gesteuert werden, wodurch die Austragungsrate der Partikel variiert werden kann. Problematisch ist hierbei, dass auf Grund des verwendeten Siebs nur pulverförmige Substanzen abgefüllt werden können. Für andere fliessfähige Substanzen insbesondere Flüssigkeiten ist dieses Verfahren nicht geeignet. Auch bei der Abfüllung pulverförmiger Substanzen birgt dieses Verfahren Nachteile, da je nach Korngrösse der Substanz ein anderes Sieb verwendet werden muss. Der wesentliche Nachteil liegt in der Steuerung des Energieauftrags auf das Sieb in Abhängigkeit des Wägesignals. Auf Grund der verzögerten Reaktionszeit der Waage müsste der Abfüllvorgang so langsam durchgeführt werden, dass die Waage genügend Zeit hat zu reagieren. Dadurch würde jedoch der Abfüllvorgang sehr lange dauern.

US 4762252 offenbart Kontrollsystem zum Befüllen von Behältern. Zur Bestimmung des Massenstroms während des Füllvorgangs wird das sich verändernde Gewicht des Reservoirs herangezogen. Der bestimmte Massenstrom wird mit einem gewünschten Massenstrom verglichen. Weicht der bestimmte Massenstrom zu stark vom gewünschten Massenstrom ab, wird der Massenstrom entsprechend korrigiert. Das beschriebene System ist zum Abfüllen von ca. 25-50 Kilogramm pro Stunde geeignet. Beim Abfüllen von kleinen Mengen, wie sie in Pharmabereich notwendig sind, werden hohe Genauigkeitsanforderungen gestellt und kleine Messungenauigkeiten können einen wesentlichen Einfluss auf die abgefüllte Masse ausüben. Gleichzeitig sollte der Füllvorgang möglichst wenig Zeit in Anspruch nehmen.

EP 2 124 025 A1 offenbart ein Verfahren zum Füllen eines Zielgefässes. Da die Waage eine gewisse Zeit benötigt bis die korrekte im Zielgefäss sich befindliche Masse angezeigt werden kann, muss der Füllvorgang entweder sehr langsam erfolgen oder die im Zielgefäss sich befindliche Masse muss geschätzt werden. Um sicherzustellen, dass nicht zu viel Substanz in das Zielgefäss abgefüllt wird, muss der Massenstrom klein genug gewählt werden, wodurch unter Umständen mehr Zeit für den Füllvorgang notwendig ist.

In EP 2 159 555 A1 wird ebenfalls ein Verfahren zum Füllen eines Zielbehälters offenbart. Bei dem offenbarten Verfahren wird nicht die Gesamtmasse, sondern der Massenstrom reguliert. Es findet sich in EP 2 159 555 A1 kein Hinweis auf eine vorteilhafte Regelung. EP 2 159 555 A1 ist ein Dokument gemäss Art. 54(3) EPÜ.

Es ist somit Aufgabe der vorliegenden Erfindung eine Methode und eine Vorrichtung zum genauen und reproduzierbaren Abfüllen einer vordefinierten kleinen Masse einer fliessfähigen Substanz zu schaffen, die einfach, schnell und genau ist.

Diese Aufgabe wird mit einem Verfahren und einer Vorrichtung gelöst, welche die in den unabhängigen Patentansprüchen angegebenen Merkmale aufweisen. Weitere vorteilhafte Ausführungsformen können den abhängigen Ansprüchen entnommen werden.

Das erfindungsgemässe Verfahren und die erfindungsgemässe Vorrichtung füllt ein Zielgefäss mit einer vorbestimmten Zielmasse $m_z$ einer fliessfähigen Substanz aus einem Reservoir mit Hilfe einer Dosiervorrichtung zum dosierten Abfüllen der Substanz in das Zielgefäss. Die Dosiervorrichtung weist ein Ventil auf, das eine variable Einstellung des Massenstroms $\dot{m}$ vom Reservoir in das Zielgefäss ermöglicht. Des weiteren weist die Dosiervorrichtung eine Zeiterfassung zur Bestimmung der seit Beginn des Füllvorgangs verstrichenen Zeit t, eine Waage zur Bestimmung der Masse m der im Zielgefäss befindenden Substanz und eine Steuereinheit mit einem Ventilsteuerungsmodul zur Steuerung des Ventils auf. Dabei weist die Steuereinheit ein Korrekturmodul auf, wobei im Korrekturmodul ein gewünschter Massenstrom $\dot{m}_*$ abgelegt ist und falls für den Zeitpunkt $t$ der Massenstrom $\dot{m}(t)$ kleiner als der gewünschte Massenstrom $\dot{m}_*$ ist, wird der Massenstrom $\dot{m}_*$ um eine Massenstromänderung

$$dm = \dot{m}_* - \dot{m}(t)$$

erhöht und falls der Massenstroms $\dot{m}(t)$ grösser als der gewünschte Massenstrom $\dot{m}_*$ ist, wird der Massenstrom $\dot{m}_*$ um eine Massenstromänderung

$$d\dot{m} = \dot{m}(t) - \dot{m}_*$$

verringert. Ausserdem weist die Steuereinheit einen adaptiven Filter zur Bestimmung des Massenstroms $\dot{m}(t)$ auf.

In die Bestimmung des gewünschten Massenstroms $\dot{m}_*$ können verschiedene Parameter eingehen.

Einer dieser Parameter ist die Totzeit $\tau$. Die Totzeit $\tau$ entspricht der Zeit zwischen dem Aufbringen der Masse auf der Waage und dem Anzeigen des Massenwertes auf der Waage bzw. der Zeit zwischen dem Aufbringen der Masse auf der Waage und Ausgabe eines elektrischen Signals, das den Massenwert beinhaltet. Die Totzeit ist je nach Waagentyp und Konfiguration etwa 1.5 bis 3 Sekunden gross. Die Totzeit $\tau$ wird mit Hilfe von Messungen bestimmt. Es hat sich gezeigt, dass die Totzeit $\tau$ mehrheitlich von der Beschaffenheit der Waage abhängt. Ausserdem haben Umgebungsparameter einen Einfluss auf die die Totzeit $\tau$. Beispielsweise haben niederfrequente Schwingungen und/oder Erschütterungen eine Vergrösserung der Totzeit $\tau$ zur Folge. Das heisst in die Totzeit $\tau$ gehen hauptsächlich die waagenspezifische Messverzögerung und Umgebungsparameter ein. Physikalische Eigenschaften der zu dosierenden Substanz spielen eine untergeordnete Rolle. Um sicherzustellen, dass nicht zuviel Masse in das Zielgefäss ausgetragen wird, kann in die Bestimmung des gewünschten Massenstroms $\dot{m}_*$ die Totzeit $\tau$ einfliessen. Dabei sollte sich die Totzeit $\tau$ antiproportional zum gewünschten Massenstrom $\dot{m}_*$ verhalten:

$$\dot{m}_* \propto \frac{1}{\tau}$$

Ein weiterer Parameter, der in die Bestimmung des gewünschten Massenstroms eingehen sollte, ist die Toleranz $m_T$ . Die Toleranz $m_T$ definiert, welche Abweichung die sich am Ende des Dosiervorgangs im Zielgefäss befindende Masse m von der Zielmasse $m_z$ maximal aufweisen darf. Mit anderen Worten die am Ende des Dosiervorgangs die sich im Zielgefäss befindende Masse m muss im Intervall

$$m_z - m_T < m < m_z + m_T$$

liegen. Ist die Toleranz $m_T$ gross, kann selbst bei einem grossen gewünschten Massenstrom $\dot{m}_*$ sicher gestellt werden, dass sich die Zielmasse $m_z$ innerhalb der vorgegebenen Toleranz $m_T$ befindet. Ist hingegen die Toleranz $m_T$ klein, muss der gewünschte Massenstrom $\dot{m}_*$ klein genug gewählt sein um sicherzustellen, dass sich die Zielmasse $m_z$ innerhalb der vorgegebenen Toleranz $m_T$ befindet. Daraus ergibt sich, dass sich der gewünschte Massenstrom $\dot{m}_*$ proportional zur Toleranz $m_T$ verhalten sollte:

$$\dot{m}_* \propto m_T$$

Unter Überschiessen wird ein mindestens um die Toleranz $m_T$ über der Zielmasse $m_z$ in das Zielgefäss eingebrachte Substanz verstanden:

$$m > m_z + m_T$$

Ein Überschiessen muss unbedingt verhindert werden, da die zuviel eingebrachte Substanz nur schwer wieder aus dem Zielgefäss entfernt werden kann. Bei der Entfernung der Substanz aus dem Zielgefäss können zudem Verunreinigungen auftreten, die es unter allen Umständen zu vermeiden gilt.

Um ein Überschiessen, der sich im Zielgefäss befindenden Masse sicher zu vermeiden, sollte die während der Totzeit $\tau$ in das Zielgefäss eingebrachte Masse kleiner als die Toleranz $m_T$ sein:

$$\dot{m}_* \cdot \tau \leq m_T$$

Daraus ergibt sich, dass der Massenstrom kleiner oder gleich der durch die Totzeit $\tau$ dividierte Toleranz $m_T$ sein muss:

$$\dot{m}_* \leq \frac{m_T}{\tau}$$

Der maximal gewünschte Massenstrom $\dot{m}_*$ ergibt sich somit aus

$$\dot{m}_* = \frac{m_T}{\tau} \, .$$

Auf diese Weise ist sicher gestellt, dass sich die am Ende des Füllvorgangs im Zielgefäss befindende Masse m im vordefinierten Toleranzbereich befindet.

Da sich die Totzeit $\tau$ in Abhängigkeit von Umgebungsparametern während eines Füllvorgangs ändern kann, kann diese veränderte Totzeit $\tau$ für eine Anpassung des gewünschten Massenstroms $\dot{m}_*$ verwendet werden.

Das Korrekturmodul vergleicht den gewünschter Massenstrom $\dot{m}_*$ mit dem aktuell vorliegenden Massenstrom $\dot{m}(t)$ und falls eine Abweichung zwischen diesen beiden Grössen vorliegt, passt es den vorliegenden Massenstrom $\dot{m}(t)$

an den gewünschten $\dot{m}_*$ Massenstrom an. Um sicher zu stellen, dass während des gesamten Füllvorgangs der gewünschte Massenstrom $\dot{m}_*$ vorliegt, wird das Korrekturmodul wiederholt angewandt. Besonders vorteilhaft ist dabei eine wiederholte Anwendung des Korrekturmoduls nach gleichgrossen Zeitschritten.

Um Instabilitäten zu vermeiden sollte der Massenstrom $\dot{m}$ nicht zu schnell geändert werden. Es ist deshalb vorteilhaft den bisher vorliegenden Massenstrom $\dot{m}_{alt}$ in den neuen Massenstroms $\dot{m}_{neu}$ einfliessen zu lassen:

$$\dot{m}_{neu} = (1-a)\dot{m}_{alt} + a(\dot{m}_{alt} - d\dot{m})$$

Der Faktor $a$ ist ein Gewichtungsfaktor, der einen beliebigen Wert zwischen Null und Eins annehmen kann, d.h. $a \in (0,1)$. Auf diese Weise ändert sich der Massenstrom $\dot{m}$ langsamer.

Eine Möglichkeit das Überschiessen der Zielmasse $m_z$ zu vermeiden, besteht darin mit Hilfe des vorliegenden Massenstroms $\dot{m}(t)$, dem von der Waage gemessenem Gewichtssignal $m(t)$ und der Totzeit $\tau$ die tatsächlich sich im Zielgefäss befindenden Masse $\tilde{m}(t)$ zu bestimmen. Dies kann mit Hilfe von

$$\tilde{m}(t) = m(t) + \tau \cdot \dot{m}(t)$$

erfolgen. Auf Basis der tatsächlich sich im Zielgefäss befindenden Masse $\tilde{m}(t)$ kann rechtzeitig mit dem Schliessen des Ventils begonnen werden und auf diese Weise ein Überschiessen der Zielmasse $m_z$ verhindert werden.

Das Risiko des Überschiessens der Zielmasse $m_z$ wird zusätzlich reduziert, indem der gewünschte Massenstrom $\dot{m}_*$ und somit auch der aktuell vorliegende Massenstrom $\dot{m}(t)$ gegen Ende des Füllvorgangs verringert wird.

Das erfindungsgemässe Verfahren und die erfindungsgemässe Vorrichtung finden insbesondere ihre Anwendung beim Abfüllen von pulverförmigen oder flüssigen Substanzen. Die fliessfähigen Substanzen weisen in der Regel komplexe rheologische Eigenschaften auf und sind meistens nicht-newtonscher Natur. Die angestrebte Zielmasse befindet sich typischerweise in einem Bereich zwischen 0.5mg und 5000mg. Es können jedoch mit diesem Verfahren auch kleinere oder grössere Massen dosiert werden.

In einer vorteilhaften Ausführungsform weist das Ventil eine mit einem kreisförmigem Querschnitt versehene Austrittsöffnung und ein Verschlusselement auf, wobei die Austrittsöffnung und das Verschlusselement auf einer gemeinsamen Achse angeordnet sind und das Verschlusselement relativ zum Gehäuse um die gemeinsame Achse rotierbar und entlang der gemeinsamen Achse translatorisch verschiebbar aus der beziehungsweise in die Austrittsöffnung aus- und einfahrbar ist und das Verschlusselement einen zylinderförmigen Verschlussbereich und einen Austragungsbereich aufweist, wodurch durch Translation um eine Länge L des Verschlusselements das Ventil geöffnet beziehungsweise geschlossen werden kann. Der Austragungsbereich des Verschlusselements ist derart ausgestaltet, dass die Substanz durch den Austragungsbereich fliessen kann, falls die Translation grösser als die minimale Translation $L_{min}$ und kleiner als die maximalen Tranlation $L_{max}$ ist. Ist die Translation kleiner als die minimale Translation $L_{min}$ oder grösser als die maximale Translation $L_{max}$ so wird die Austrittsöffnung durch den zylinderförmigen Verschlussbereich verschlossen und die Substanz kann nicht durch den Austragungsbereich austreten.

Der Massenstrom $\dot{m}$ ist direkt mit der Translation L des Verschlusselements korreliert.

Für die Bestimmung des vorliegenden Massenstroms $\dot{m}$ kann ausserdem das Waagensignal $m(t)$ herangezogen werden. Dazu wird die erste Ableitung nach der Zeit vom Waagensignal bestimmt:

$$\dot{m}(t) = \frac{m(t) - m(t - \Delta t)}{\Delta t}$$

Dabei kann $\Delta t > 0$ beliebig gewählt werden. Bei der Wahl von $\Delta t$ ist jedoch darauf zu achten, dass $\Delta t$ gross genug ist, so dass statistische Schwankungen des Waagensignals ausgeglichen werden und somit $\dot{m}$ nicht zu starke Schwankungen zeigt. Zu starke Schwankungen können eine Instabilität des Dosiervorgangs zur Folge haben. Die Bestimmung des Massenstroms $\dot{m}(t)$ nach äquidistanten diskreten Zeitschritten $\Delta t$ ist dabei bevorzugt. Dazu wird ab dem Öffnen des Ventils zum Zeitpunkt $t_1$ jeweils nach jedem Zeitschritt $\Delta t$ zum Zeitpunkt

$$t_i = t_1 + i \cdot \Delta t$$

der Massenstrom $\dot{m}(t_i)$ mit Hilfe der folgenden Gleichung bestimmt:

$$\dot{m}(t_i) = \frac{m(t) - m(t - n\Delta t)}{n\Delta t}, n = 1,2,3,...$$

Bevorzugterweise ist dabei $n$ eine natürliche Zahl zwischen 2 und 10. Bei einem Füllvorgang der ca. 30 - 90 Sekunden dauert, sollte $\Delta t$ etwa 2 bis 3 Sekunden gross sein. Wird ein grösseres $n$ verwendet, so wird der Massenstrom $\dot{m}(t_i)$ über ein grösseres Zeitintervall bestimmt, wodurch einerseits statistische Schwankungen des Waagensignals ausgeglichen werden. Andererseits reagiert $\dot{m}(t_i)$ bei Verwendung eines grossen Zeitintervalls nur relativ langsam, wodurch ein veränderter Massenstrom erst relativ spät erkannt wird. Auf Basis des bestimmten Massenstroms $\dot{m}(t)$ kann die Abweichung vom gewünschten Massenstrom $\dot{m}_*$ bestimmt werden und der Massenstrom $\dot{m}(t)$ kann entsprechend korrigiert werden

$$d\dot{m} = \dot{m}_* - \dot{m}(t) .$$

Auf Grund der zeitlich verzögerten Ausgabe der Totzeit $\tau$ der Waage ist es nicht möglich den Massenstrom $\dot{m}(t)$ zum Zeitpunkt $t$ zu bestimmen, sondern es kann nur der Massenstrom zum Zeitpunkt $t - \tau$ bestimmt werden. Haben sich in der Zwischenzeit Parameter, wie zum Beispiel Ventileinstellungen geändert, ist der bestimmte Massenstrom nicht korrekt.

Vorteilhafterweise wird deshalb ein adaptiver Filter zur Schätzung des vorliegenden Massenstroms $\dot{m}$ angewandt. Adaptive Filter werden in der Signalverarbeitung unter anderem zur adaptiven Entzerrung von Eingangssignalen verwendet.

Durch die Verwendung eines adaptiven Filters kann der Massenstrom $\dot{m}(t)$ genauer und schneller bestimmt werden, wodurch die Genauigkeit des Füllvorgangs verbessert wird.

Die von der Waage gemessene Masse $m$ , die seit Beginn des Füllvorgangs verstrichene Zeit $t$ und ventilspezifische Parameter, die einen Einfluss auf den Massenstrom $\dot{m}$ haben, dienen als Eingangssignale des adaptiven Filters. Bei der hier betrachteten Geometrie des Ventils ist die ventilspezifische Grösse die Länge L , die die Translation des Verschlusselements bezeichnet. Für andere Geometrien können natürlich andere Parameter verwendet werden.

Bei entsprechender Ventilgeometrie ist die Länge L näherungsweise direkt proportional zum Massenstrom $\dot{m}$ . Der Massenstrom ergibt sich somit aus

$$\dot{m} = k \cdot L ,$$

wobei k ein konstanter spezifischer Massenflussfaktor ist. Dieser Faktor $k$ ist zunächst unbekannt. Vorteilhaft ist es den Faktor $k$ mit Hilfe eines adaptiven Filters möglichst genau zu schätzen. Ein gängiger Einstellalgorithmus basiert dabei auf einer Methode zur Minimierung der Fehlerquadrate, dem Least Mean Squares (LMS) Algorithmus. Bessere Ergebnisse werden mit rekursiven Verfahren, wie beispielsweise dem Recursive Least Square (RLS) Algorithmus erreicht. Sowohl der LMS- als auch der RLS-Algorithmus können der einschlägigen Fachliteratur entnommen werden. Außer LMS- und RLS- Algorithmen kann auch die H-Infinity Methode angewandt werden. Bei der H-Infinity Methode werden nicht die Fehlerquadrate minimiert, sondern der maximale Fehler, wodurch Extremfälle besser behandelt werden. Auch die H-Infinity Methode kann der Fachliteratur entnommen werden.

Das Eingangssignal des RLS-Algorithmus ist eine mathematische Folge von folgenden Zahlenwerten

$$k_n = \frac{\dot{m}_n}{L} \approx \frac{1}{L} \frac{m(t_n) - m(t_{n-1})}{t_n - t_{n-1}} \quad \text{für} \quad t_{n-1} < t_n ,$$

wobei die Zeitschritte $t_n - t_{n-1} = \Delta t$ idealerweise konstant sind.

Der auf Messwerten basierende Faktor $k_n$ wird mit einem mit Hilfe eines Models geschätzten Faktors $\hat{k}_n$ verglichen und es ergibt sich die Fehlerfolge

$$e_n = \hat{k}_n - k_n \, .$$

Im Idealfall, d.h. wenn das Filter die Eingangsfolge durch die Filterung exakt so verändert, *dass* $\hat{k}_n$ gleich $k_n$ wird, ist die Fehlerfolge 0. Bei einer Abweichung weist das Fehlersignal $e_n$ Werte ungleich 0 auf. Der Regelalgorithmus minimiert dann durch Veränderung der Filterkoeffizienten das Fehlersignal. Durch die Fehlerrückführung wird ein genauerer Wert *für* $\hat{k}$ ermittelt. Mit diesem *Faktor* $\hat{k}$ ist auch die Schätzung des vorliegenden Massenstroms

$$\hat{\dot{m}} = \hat{k} \cdot L$$

genauer.

Falls das Fehlersignal $e_n$ , dessen Summe $\sum_{k=1}^{n} e_k$ und/oder dessen gewichtete Summe $\sum_{k=1}^{n} a_k e_k$ einen Schwellwert überschreitet, ist es vorteilhaft den gewünschten Massenstrom $\dot{m}_*$ zu reduzieren und auf diese Weise ein Überschiessen der Zielmasse $m_z$ zu vermeiden.

Mit einem zusätzlichen "Forgetting Factor" $\lambda$ wird der Einfluss von älteren Fehlerwerten reduziert:

$$\sum_{k=1}^{n} \lambda^{n-1} e_k \, ,$$ wobei $0 < \lambda \le 1$

Vorteilhaft ist des Weiteren, dass das Ventil mit Hilfe von gleichgrossen schrittweisen Translationsbewegungen $\Delta L$ des Verschlusselements geöffnet beziehungsweise geschlossen wird.

Idealerweise wird beim Füllvorgang die minimale Translation $L_{min}$ bei der die Substanz fliessen kann und/oder die maximale Translation $L_{max}$ bestimmt. Des Weiteren ist es sinnvoll die tatsächlich am Ende des Füllvorgangs vorliegende Masse zu bestimmen. Diese Parameter können abgespeichert werden und bei nachfolgenden Füllvorgängen von der Steuereinheit verwendet werden. Dadurch müssen diese Parameter nur einmal bestimmt werden und nachfolgende Füllvorgänge können schneller durchgeführt werden. Diese Parameter aus vorhergehenden Füllvorgängen können in einem Speichermodul, insbesondere einer RFID (Radio Frequency Identification) Marke abgelegt werden und in späteren Füllvorgängen verwendet werden. Besonders vorteilhaft ist es die RFID Marken am jeweiligen Reservoir zu befestigen, da dadurch ein direkter Zusammenhang zwischen der sich im Reservoir befindenden Substanz und den in der RFID Marke gespeicherten Daten gewährleistet ist. Es ist jedoch auch die Verwendung von anderen Speichermedien möglich.

Idealerweise wird nur beim ersten Füllvorgang das Ventil mit gleichgrossen schrittweisen Translationsbewegungen $\Delta L$ des Verschlusselements geöffnet bis die Substanz zu fliessen beginnt, wodurch die minimale Translation $L_{min}$ definiert ist. Zur Bestimmung der maximalen Translation $L_{max}$ wird das Verschlusselement um eine Distanz $L_{min}$ + $\Delta L$ geöffnet. Anschliessend wird das Ventil mit gleichgrossen schrittweisen Translationsbewegungen $\Delta L$ des Verschlusselements verschoben bis die Substanz zu fliessen aufhört, wodurch die maximale Translation $L_{max}$ definiert ist. Nachdem die minimale Translation $L_{min}$ und die maximale Translation $L_{max}$ bekannt sind, kann das Verschlusselement auf beliebige Weise geöffnet und geschlossen werden.

Vorteilhafterweise weist der Austragungsbereich des Verschlusselements einen variablen Öffnungsquerschnitt $A$ auf. Auf diese Weise ist die Grösse des durch das Ventil fliessenden Massenstroms $\dot{m}$ direkt mit der Stellung des Verschlusselements des Ventils korreliert. Idealerweise korreliert hierbei die Translation der Länge $L$ des Verschlusselements direkt mit dem Öffnungsquerschnitts des Ventils, das heisst

$A = A(L)$ . Je nach Gestaltung des Ventils liegt eine direkte proportionale Beziehung zwischen der Translation des Verschlusselements L, des Öffnungsquerschnitts A und dem Massenstrom $\dot{m}$ vor:

$$\Delta L \propto \Delta A \propto \dot{m}^3$$

Der Fluss ist auf Grund der geometrischen Ausgestaltung des Verschlusselements kubisch von der Tranlation L abhängig und wurde experimentell bestimmt. Eine Änderung der Geometrie des Verschlusselements hätte auch eine Änderung der Beziehung zwischen der Translation $_L$ und dem Massenstrom $\dot{m}$ zur Folge.

Eine solche direkte Proportionalität ist jedoch in realen Fällen in der Regel nicht erreichbar, da auch die Stoffeigenschaften, wie beispielsweise Korngrösse, Fliessverzögerung zu Beginn des Fliessvorgangs oder ähnliches einer direkten Proportionalität entgegenwirken. Jedoch gilt in der Regel, dass bei grösserem Öffnungsquerschnitt ein grösserer Massenstrom vorliegt.

Vorteilhaft ist die Verwendung eines Verschlusselements, das mit einer variablen Rotationsgeschwindigkeit $\omega$ rotierbar ist, wobei die Rotationsgeschwindigkeit $\omega$ direkt mit dem durch das Ventil fliessenden Massenstrom $\dot{m}$ korreliert.

Von Vorteil ist des Weiteren, dass das Ventil einen Schlagmechanismus aufweist, wobei mit einer variablen Schlagfrequenz F gegen das bereits geöffnete Ventil geschlagen wird. Dabei korreliert die Schlagfrequenz F direkt mit dem durch das Ventil fliessenden Massenstrom $\dot{m}$ und eine Erhöhung der Schlagfrequenz F führt zu einem grösseren Massenstrom $\dot{m}$. Dabei kann sowohl in Richtung der Achse als auch senkrecht zur Richtung der Achse des Verschlusselements geschlagen werden.

Ausserdem kann gegen das Verschlusselement des Ventils und/oder gegen das Gehäuse des Ventils geschlagen werden.

Sowohl bei der Rotation als auch beim Schlagen, wirkt sich vorteilhaft aus, dass dadurch einem Verstopfen des Ventils und/oder der Bildung von Pulverbrücken entgegen gewirkt werden kann. Auf diese Weise kann die Fliessfähigkeit des Pulvers erhalten beziehungsweise erhöht werden.

Da auch die Rotation $\omega$ und die Schlagfrequenz F einen Einfluss auf den Massenstrom $\dot{m}$ haben, sollten diese Parameter ebenfalls bei der Schätzung des Massenstroms $\dot{m}$ eingehen.

Die Steuereinheit kann teilweise oder als Ganzes als computerbasiertes System realisiert werden.

Das Verfahren und die Vorrichtung zum Füllen von Zielgefässen werden anhand von Beispielen, wie sie schematisch in den Zeichnungen dargestellt sind, im Folgenden beschrieben. Es zeigen:

Figur 1  eine schematische Darstellung der erfindungsgemässen Vorrichtung zum Füllen von Zielgefässen;

Figur 2  ein Ventil mit einem Ventilgehäuse und einem Verschlusselement;

Figur 3  Graphen mit einem idealisierten Verlauf des Öffnungsquerschnitts und dem daraus resultierenden Massenverlauf und

Figur 4  Graphen, die den idealisierten Einfluss des Öffnungsquerschnitts A , der Schlagfrequenz F und der Rotationsgeschwindigkeit $\omega$ auf den Massenstrom $\dot{m}$ verdeutlichen.

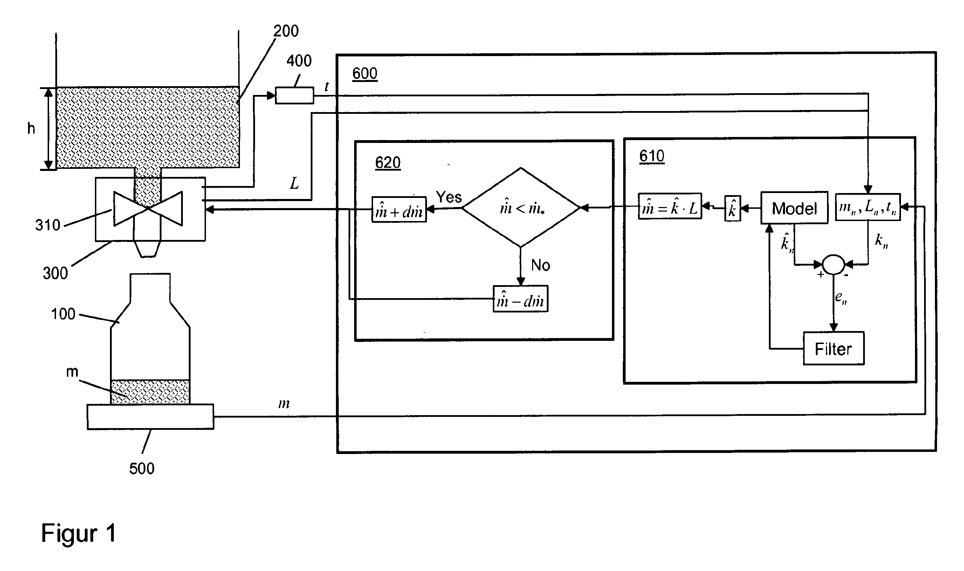

Figur 1 zeigt ein Zielgefäss 100, das mit einer sich im Reservoir 200 bis zur Füllstandshöhe $h$ befindenden Substanz über eine Dosiervorrichtung 300 befüllt werden kann. Die Dosiereinrichtung 300 ist mit einer Zeiterfassung 400 verknüpft, mit deren Hilfe die seit Beginn des Füllvorgangs vergangene Zeit $t$ erfasst werden kann wobei das ermittelte Zeitsignal an eine Steuereinheit 600 übermitteln kann. Das Zielgefäss 100 ist auf einer Waage 500 angeordnet, so dass das Gewicht der sich im Zielgefäss 100 befindenden Substanz bestimmt werden kann. Das ermittelte Wägebeziehungsweise Massensignal m kann ebenfalls an die Steuereinheit 600 übermittelt werden.

Es ist das Ziel das Zielgefäss 100 mit vordefinierten Zielmasse $m_z$ einer fliessfähigen Substanz zu füllen, wobei die sich am Ende des Dosiervorgangs im Zielgefäss 100 befindende Masse $m$ maximal um die Toleranz $m_T$ von der Ziel masse $m_z$ abweichen darf. Es muss folglich gelten:

$$m_z - m_T < m < m_z + m_T$$

Um zu verhindern, dass zuviel Masse in das Zielgefäss 100 abgefüllt wird, sollte der Massenstrom kleiner als der Quotient aus Toleranz $m_T$ und Totzeit $\tau$ sein. Das heisst der gewünschte Massenstrom $\dot{m}_*$ ergibt sich aus

$$\dot{m}_* < \frac{m_T}{\tau},$$

Die Totzeit $\tau$ ist ein waagenspezifischer Parameter der unabhängig von den physikalischen Eigenschaften der abzufüllenden Substanz ist. Die Totzeit τ kann vor dem ersten Füllvorgang bestimmt werden und in der Steuereinheit 600 gespeichert werden.

Die Totzeit τ ist von den technischen Merkmalen der Waage 500 und von Umgebungsparametern abhängig. Die Umgebungsparameter können sich im Laufe eines Füllvorgangs ändern, wodurch sich auch die Totzeit τ ändern kann. Diese Änderung der Totzeit τ kann kontinuierlich bestimmt werden und in Abhängigkeit der veränderten Totzeit τ kann der gewünschte Massenstrom $\dot{m}_*$ angepasst werden. Es ist jedoch auch möglich den gewünschte Massenstrom $\dot{m}_*$ auf eine andere Weise zu bestimmen.

In der Steuereinheit 600 werden im Massenstrombestimmungsmodul 610 mit Hilfe der gemessenen Masse $m$ , der gemessenen Zeit $t$ und Ventilparametern z.B. L der Massenstrom $\hat{\dot{m}}$ geschätzt. Vorteilhafterweise kann durch geeignete Anwendung eines adaptiven Filters, wie beispielsweise einem RLS-Algorithmus, der Massenstrom $\hat{\dot{m}}$ geschätzt werden. Wird davon ausgegangen, dass sich der Ventilparameter L proportional zum Massenstrom $\dot{m}$ verhält, so ergibt sich der Massenstrom $\dot{m}$ aus

$$\dot{m} = k \cdot L \ .$$

k ist dabei ein konstanter spezifischer Massenflussfaktor, der zu schätzen ist. Dazu kann ein adaptiver Filter, vorteilhafterweise mit Fehlerrückführung, verwendet werden.

Mit dem geschätzten $\hat{k}$ Massenflussfaktor kann der Massenstrom $\hat{\dot{m}}$ geschätzt werden.

Der bestimmte Massenstrom $\hat{\dot{m}}(t)$ wird an ein Korrekturmodul 620 weitergegeben, welches den aus Messwerten bestimmten Massenstrom $\hat{\dot{m}}(t)$ mit dem gewünschten Massenstrom $\dot{m}*$ vergleicht. Sollte der bestimmte Massenstrom $\hat{\dot{m}}(t)$ kleiner als der gewünschte Massenstrom $\dot{m}_*$ sein, so wird der Massenstrom $\dot{m}$ um $d\dot{m}$ erhöht und falls der bestimmte Massenstroms $\hat{\dot{m}}(t)$ grösser als der gewünschte Massenstrom $\dot{m}_*$ ist, so wird der Massenstrom $\dot{m}$ um $d\dot{m}$ verringert. Nach der Korrektur sollte der vorliegende Massenstrom $\dot{m}(t)$ dem gewünschten Massenstrom $\dot{m}_*$ entsprechen. Vom Korrekturmodul 620 wird das Signal zur Änderung des Massenstroms an Ventil 310 gegeben. Die Veränderung des Massenstroms $\dot{m}(t)$ wird entsprechende Anpassung von Ventilparametern, wie z.B. der Länge L erreicht. Die Bestimmung des vorliegenden Massenstroms wird wiederholt während des Füllvorgangs angewandt und falls notwendig wird der Massenstrom $\dot{m}(t)$ korrigiert. Die Bestimmung des Massenstroms $\hat{\dot{m}}(t)$ und/oder die Korrektur des Massenstroms $\dot{m}(t)$ kann nach äquidistanten Zeitschritten erfolgen. Auf Grund der Totzeit kann der Massenstrom $\dot{m}(t)$ nicht genau bestimmt werden. $\hat{\dot{m}}(t)$ ist ein Schätzwert.

Es ist auch möglich den adaptive Filter kann für die Schätzung des Massenstroms $\hat{\dot{m}}(t)$ , von Ventilparametern, z.B. L oder andere Faktoren, die einen Einfluss auf den Massenstrom $\dot{m}$ haben, zu verwendet. Die Schätzung des Massenflussfaktors k ist dann nicht notwendig.

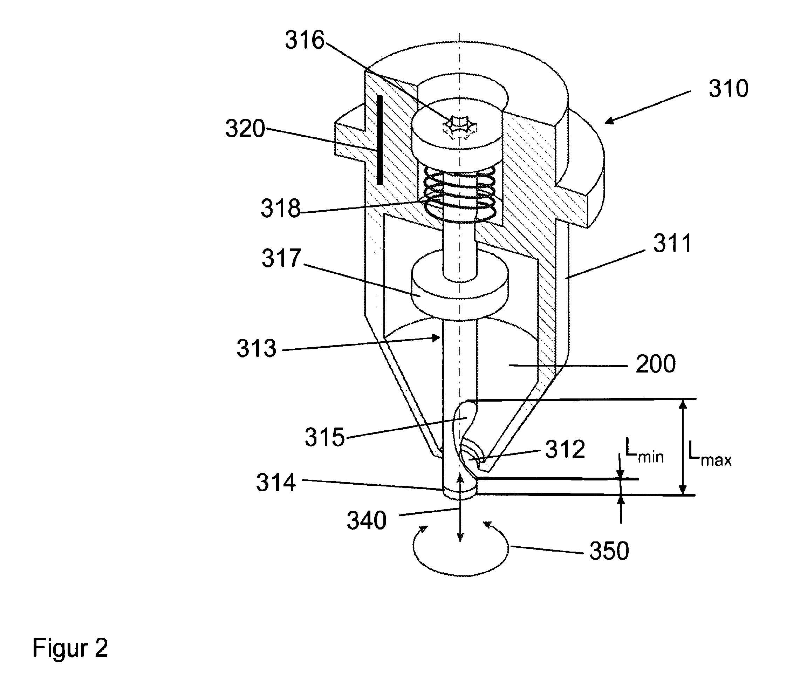

Figur 2 zeigt ein Ventil 310 mit einem Gehäuse 311 und eine mit einem kreisförmigen Querschnitt versehenen Austrittsöffnung 312. In dem Ventil 310 ist ein Verschlusselement 313 angeordnet. Das Verschlusselement 313 weist einen zylinderförmigen Verschlussbereich 314 und einen Austragungsbereich 315 auf. Die Austrittsöffnung 312 und das Verschlusselement 313 sind auf einer gemeinsamen Achse angeordnet und das Verschlusselement 313 kann relativ zum Gehäuse 311 sowohl um die gemeinsame Achse rotieren 350 als auch entlang der gemeinsamen Achse translatorisch 340 verschoben werden. Dadurch kann das Verschlusselement 313 aus der beziehungsweise in die Austrittsöffnung 312 aus- und eingefahren werden. Diese Rotation 350 beziehungsweise Translation 340 des Verschlusselements 313 erfolgt mit Hilfe eines Antriebs, der über ein Kupplungselement 316 mit dem Verschlusselement 313 gekoppelt ist. Zwischen dem Ventilgehäuse 311 und dem Verschlusselement 313 ist ein Rückstellelement 318 angeordnet, das eine Rückstellung des Verschlusselements 313 ermöglicht. Vorzugsweise ist dieses Rückstellelement 318 eine Schliessfeder. Die Rückstellung der Schliessfeder ist durch einen Anschlag 317 begrenzt.

Zwischen dem Verschlusselement 313 und dem Gehäuse des Ventils 311 ist ein Hohlraum vorhanden, der als Reservoir 200 für die auszutragende Substanz dient. Durch Translation 340 des Verschlusselements 313 kann das Ventil 310 geöffnet werden. Die auszutragende Substanz kann aus dem Reservoir 200, über den Austragungsbereich 315 des Verschlusselements 313 durch die Austrittsöffnung 312 aus dem Reservoir 200 in das Zielgefäss 100 gelangen.

Für die Speicherung von Daten weist das Ventil 310 ein Speichermodul 320 auf. Dieses Speichermodul 320 erlaubt beispielsweise die Speicherung von Stoffeigenschaften der zu dosierenden Substanz, von Fliessparametern aus vorangehenden Füllvorgängen und/oder waagenspezifischen Parametern, wie z.B. die Totzeit $\tau$. Das Speichermodul 320 ist am oder im Ventilgehäuse 311 angebracht.

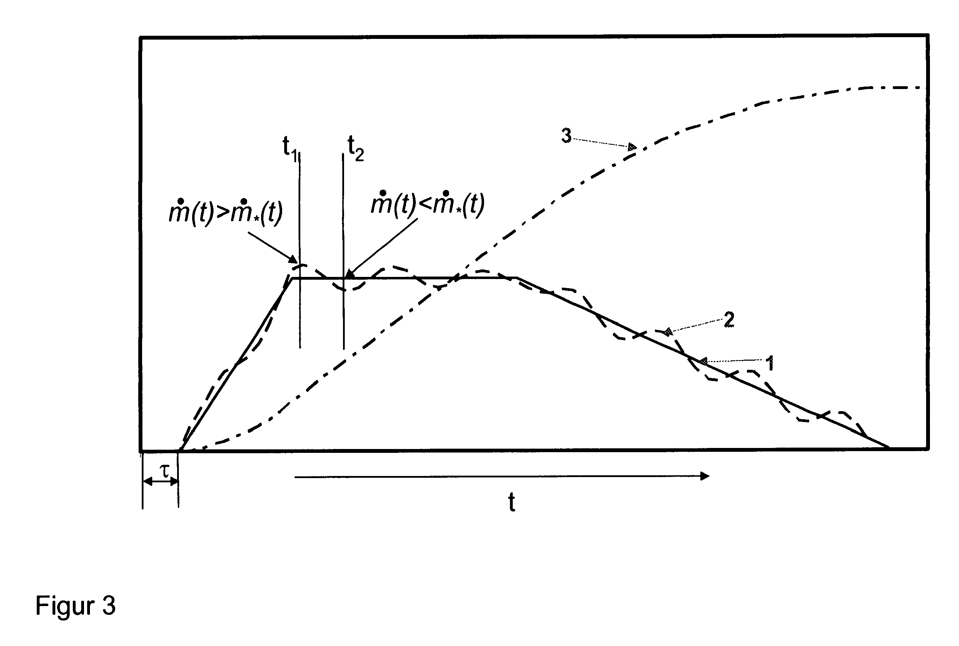

Figur 3 zeigt einen Graphen 1 mit einem Verlauf des gewünschten Massenstroms $\dot{m}_*$, einen weiteren Graphen 2 mit einem Verlauf des Massenstroms $\dot{m}(t)$ des erfindungsgemässen Füllvorgangs und einen weiteren Graphen 3 mit dem aus dem Verlauf des Massenstroms m(t) nach Graph 2 resultierenden Massensignal m(t) . Aufgrund der Verzögerung zwischen Aufbringen der Masse $m(t)$ in das Zielgefäss 100 und dem Ausgeben des Massenwerts auf der Waage 500 nach Figur 1 und 2 liegt eine Totzeit $\tau$ vor. Sobald von der Waage 500 eine Masse angezeigt wird, kann der Massenstrom $\dot{m}(t)$ bestimmt werden. Zu Beginn des Füllvorgangs wird das Ventil 310 relativ schnell geöffnet, was nach der Totzeit einen grossen Massenstrom $\dot{m}(t)$ und einen steilen Anstieg der Masse $m(t)$ zur Folge hat. Ein zu grosser Öffnungsquerschnitts A hat jedoch einen grossen Massenstrom $\dot{m}(t)$ zur Folge, was ein schnelles Füllen des Zielbehälters 100 und das Risiko des Überschiessens der Zielmasse $m_z$ in sich birgt. Aus diesem Grund kann es sinnvoll sein, den Füllvorgang zu verlangsamen indem der gewünschte Massenstrom $\dot{m}_*$ durch eine Verkleinerung des Öffnungsquerschnitts A gegen Ende des Füllvorgangs reduziert wird.

Zeigt ein Vergleich des vorliegenden Massenstroms $\dot{m}(t)$ mit dem gewünschten Massenstrom $\dot{m}_*$, dass der vorliegende Massenstrom $\dot{m}(t)$ grösser als der gewünschte Massenstrom $\dot{m}_*$ ist, so wird der vorliegende Massenstrom $\dot{m}(t)$ reduziert indem der Öffnungsquerschnitt A des Ventils 310 verringert wird. Zeigt ein Vergleich des vorliegenden Massenstroms $\dot{m}(t)$ mit dem gewünschtem Massenstrom $\dot{m}_*$ jedoch dass der vorliegende Massenstroms $\dot{m}(t)$ kleiner als der gewünschte Massenstrom $\dot{m}_*$ ist, so wird der vorliegende Massenstrom $\dot{m}(t)$ erhöht indem der Öffnungsquerschnitt A des Ventils 310 erhöht wird.

Gegen Ende des Füllvorgangs wird der Öffnungsquerschnitt A des Ventils und somit der Massenstrom $\dot{m}(t)$ verringert. Auf diese Weise kann sich die im Zielgefäss 100 befindende Masse $m(t)$ langsam der Zielmasse $m_z$ annähern, wodurch ein Überschiessen der Zielmasse $m_z$ vermieden wird.

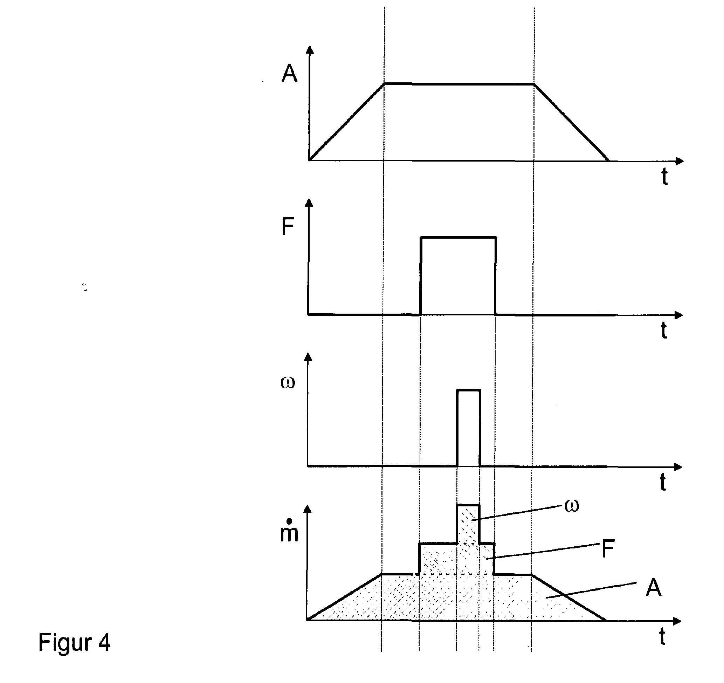

Figur 4 zeigt einen idealisierten Verlauf des Öffnungsquerschnitts A , eine sprunghaft ansteigende Schlagfrequenz F und eine sprunghaft ansteigende Rotationsgeschwindigkeit $\omega$ während eines Füllvorgangs. Die Überlagerung dieser Parameter führt idealerweise zu dem gezeigten Verlauf des Massenstroms $\dot{m}$ . Dabei wird deutlich, dass sowohl der Öffnungsquerschnitt A , die Schlagfrequenz F und die Rotationsgeschwindigkeit $\omega$ einen Einfluss auf den Verlauf des Massenstroms $\dot{m}$ ausüben.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden.

Bezugszeichenliste

100    Zielgefäss

200    Reservoir

300    Dosiervorrichtung

310    Ventil

311    Ventilgehäuse

312    Austrittsöffnung des Ventils

313    Verschlusselement

314    Zylinderförmiger Verschlussbereich

315    Austragungsbereich des Verschlusselements

316     Kupplungselement

317     Anschlag

318     Rückstellelement

320     Speichermodul

340     Translation des Verschlusselements

350     Rotation des Verschlusselements

400     Zeiterfassung

500     Waage

600     Steuereinheit

610     Massenstrombestimmungsmodul

620     Korrekturmodul

Verwendete Symbole

$A$      Öffnungsquerschnitt
$d$     Korngrösse
$d\dot{m}$      Massenstromänderung
$e$     Fehler
$F$     Schlagfrequenz
$h$     Füllstandshöhe der im Reservoir befindenden Substanz
$\bar{k}$     Spezifischer Massenflussfaktor
$k$     Gemessener spezifischer Massenflussfaktor
$\hat{k}$     eschätzter spezifischer Massenflussfaktor
$L$     Länge der Translation des Verschlusselements
$L_{min}$      Minimale Translation bei der die Substanz fliesst
$L_{max}$      Maximale Translation des Verschlusselements
$m$     Masse

$$\dot{m} = \frac{dm}{dt}$$     Massenstrom

$\hat{\dot{m}}$      Geschätzter Massenstrom
$\dot{m}^*$     Gewünschter Massenstrom
$\tilde{m}(t)$      sich im Zielgefäss befindende Masse
$m_T$     Toleranz der Zielmasse
$m_z$     Zielmasse
$t$     Beliebiger Zeitpunkt während des Füllvorgangs
$t_1$     Zeitpunkt des Beginns des Füllvorgangs
$t_2$     Zeitpunkt des Endes des Füllvorgangs
$\lambda$     Forgetting Factor
$\omega$     Rotationsgeschwindigkeit

**Patentansprüche**

**1.**   Verfahren zum Füllen eines Zielgefässes (100) mit einer vorbestimmten Zielmasse $m_z$ einer fliessfähigen Substanz aus einem Reservoir (200) mit Hilfe einer Dosiervorrichtung (300) zum dosierten Abfüllen der Substanz in das Zielgefäss (100) mit einem Ventil (310), das eine variable Einstellung des Massenstroms $\dot{m}$ vom Reservoir (200) in das Zielgefäss ermöglicht (100), einer Zeiterfassung (400) zur Bestimmung der seit Beginn des Füllvorgangs verstrichenen Zeit $t$, einer Waage (500) zur Bestimmung der Masse der sich im Zielgefäss (100) befindenden Substanz $m$ und einer Steuereinheit (600) zur Steuerung des Ventils (310), wobei die Steuereinheit (600) ein Korrekturmodul (620) aufweist, im Korrekturmodul (620) ein gewünschter Massenstrom $\dot{m}$. abgelegt ist und falls für den Zeitpunkt $t$ der Massenstrom $\dot{m}(t)$ kleiner als der gewünschte Massenstrom $\dot{m}$, ist, wird der Massenstrom um eine Massenstromänderung $d\dot{m}$ erhöht und falls der Massenstrom $\dot{m}(t)$ grösser als der gewünschte Massenstrom $\dot{m}$, ist, wird der Massenstrom um eine Massenstromänderung $d\dot{m}$ verringert, wobei die Massenstromänderung $d\dot{m}$ aus der

Differenz des gewünschtem Massenstrom $\dot{m}$, und des geschätzten Massenstroms $\hat{\dot{m}}(t)$ gebildet wird und sich die Zielmasse $m_z$ innerhalb einer Toleranz $m_T$ befinden muss **dadurch gekennzeichnet, dass**

die Steuereinheit (600) einen adaptiven Filter zur Bestimmung des Massenstroms $\dot{m}(t)$ aufweist und zwischen dem Aufbringen einer Masse und der Ausgabe dieser Masse eine Totzeit $\tau$ vorliegt und der gewünschte Massenstrom $\dot{m}$. derart gewählt wird, dass der gewünschte Massenstrom $\dot{m}$. sich antiproportional zur Totzeit $\tau$ verhält und der gewünschte Massenstrom $\dot{m}$. sich proportional zur Toleranz $m_T$ verhält.

2. Verfahren nach Anspruch 1, **dadurch gekennzeichnet, dass** der adaptive Filter einen Recursive Least Square (RLS) Filter aufweist.

3. Verfahren nach Anspruch 1, **dadurch gekennzeichnet, dass** der adaptive Filter einen Least Mean Square (LSM) Filter aufweist.

4. Verfahren nach einem der vorangehenden Ansprüche, **dadurch gekennzeichnet, dass** das Korrekturmodul (620) nach gleichgrossen Zeitschritten wiederholt angewandt wird.

5. Verfahren nach einem der vorangehenden Ansprüche, **dadurch gekennzeichnet, dass** in die Bestimmung des neuen Massenstroms $\dot{m}_{neu}$ der bisher vorliegende Massenstrom $\dot{m}_{alt}$ nach der Beziehung $\dot{m}_{neu}$ = (1-a)$\dot{m}_{alt}$ + a($\dot{m}_{alt}$ $\pm$ $d\dot{m}$) einfliesst, wobei $a$ ein Gewichtungsfaktor ist, der einen beliebigen Wert zwischen Null und Eins annehmen kann.

6. Verfahren nach einem der vorangehenden Ansprüche, **dadurch gekennzeichnet, dass** das Ventil (310) ein Gehäuse (311) und eine mit einem kreisförmigem Querschnitt versehenen Austrittsöffnung (312) und ein Verschlusselement (313) aufweist, wobei die Austrittsöffnung (312) und das Verschlusselement (313) auf einer gemeinsamen Achse angeordnet sind und das Verschlusselement (313) relativ zum Gehäuse (311) um die gemeinsame Achse rotierbar ist und entlang der gemeinsamen Achse translatorisch verschiebbar ist, wird aus der beziehungsweise in die Austrittsöffnung (312) aus- und eingefahren wird und das Verschlusselement (313) einen zylinderförmigen Verschlussbereich (314) und einen Austragungsbereich (315) aufweist, wobei durch Translation (340) des Verschlusselements (313) das Ventil (310) geöffnet beziehungsweise geschlossen wird.

7. Verfahren nach Anspruch 7, **dadurch gekennzeichnet, dass** die Grösse des Massenstroms $\dot{m}(t)$ direkt mit der Translation des Verschlusselements (313) korreliert.

8. Verfahren nach einem der Ansprüche 7 oder 8, **dadurch gekennzeichnet, dass** das Ventil (310) mit Hilfe von gleichgrossen schrittweisen Translationsbewegungen $\Delta L$ des Verschlusselements (313) geöffnet beziehungsweise geschlossen wird.

9. Verfahren nach einem der Ansprüche 7, 8 oder 9, **dadurch gekennzeichnet, dass** beim Füllvorgang die minimale Translation $L$ des Verschlusselements (313) bei der die Substanz zu fliessen beginnt bestimmt und diese Parameter $L$ abgespeichert wird und bei nachfolgenden Füllvorgängen von der Steuereinheit (600) zur Steuerung des Massenstroms $\dot{m}(t)$ verwendet wird.

10. Vorrichtung zum Füllen eines Zielgefässes (100) mit einer vorbestimmten Zielmasse $m_z$ einer fliessfähigen Substanz aus einem Reservoir (200) mit einer Dosiervorrichtung (300) zum dosierten Abfüllen der Substanz in das Zielgefäss (100) mit einem Ventil (310), das eine variable Einstellung des Massenstroms $\dot{m}$ vom Reservoir (200) in das Zielgefäss ermöglicht (100), einer Zeiterfassung (400) zur Bestimmung der seit Beginn des Füllvorgangs verstrichenen Zeit $t$, einer Waage (500) zur Bestimmung der Masse der im Zielgefäss (100) befindenden Substanz $m$ und einer Steuereinheit (600) zur Steuerung des Ventils (310) und die Steuereinheit (600) ein Korrekturmodul (620) aufweist, wobei im Korrekturmodul (620) ein gewünschter Massenstrom $\dot{m}.$ abgelegt ist und falls für den Zeitpunkt $t$ der Massenstroms $\dot{m}(t)$ kleiner als der gewünschte Massenstrom $\dot{m}.$ ist, so ist der Massenstrom um eine Massenstromänderung $d\dot{m}$ erhöhbar und falls der Massenstroms $\dot{m}(t)$ grösser als der gewünschte Massenstrom $\dot{m}.$ ist, so ist der Massenstrom um eine Massenstromänderung $d\dot{m}$ verringerbar, **dadurch gekennzeichnet, dass** die Steuereinheit (600) einen adaptiven Filter zur Bestimmung des Massenstroms $\dot{m}(t)$ aufweist und zwischen dem Aufbringen einer Masse und der Ausgabe dieser Masse eine Totzeit $\tau$ vorliegt und der gewünschte Massenstrom $\dot{m}.$ derart gewählt wird, dass der gewünschte Massenstrom $\dot{m}.$ sich antiproportional zur Totzeit $\tau$ verhält und der gewünschte Massenstrom $\dot{m}.$ sich proportional zur Toleranz $m_T$ verhält.

11. Vorrichtung nach Anspruch 11, **dadurch gekennzeichnet, dass** das Ventil (310) ein Gehäuse (311) und eine mit einem kreisförmigen Querschnitt versehene Austrittsöffnung (312) und ein Verschlusselement (313) aufweist, wobei die Austrittsöffnung (312) und das Verschlusselement (313) auf einer gemeinsamen Achse angeordnet sind und das Verschlusselement (313) relativ zum Gehäuse (311) um die gemeinsame Achse rotierbar und entlang der gemeinsamen Achse translatorisch verschiebbar aus der beziehungsweise in die Austrittsöffnung (312) aus- und einfahrbar ist und das Verschlusselement (313) einen zylinderförmigen Verschlussbereich (314) und einen Austragungsbereich (315) aufweist, wobei durch Translation des Verschlusselements (313) das Ventil geöffnet beziehungsweise geschlossen werden kann.

12. Vorrichtung nach Anspruch 12, **dadurch gekennzeichnet, dass** der Austragungsbereich des Verschlusselements (315) einen variablen Öffnungsquerschnitt $A$ aufweist und die Translation des Verschlusselements (313) direkt mit dem Öffnungsquerschnitts $A$ des Ventils (310) korreliert ist.

13. Vorrichtung nach einem der Ansprüche 11 bis 13, **dadurch gekennzeichnet, dass** das Verschlusselement (313) mit einer variablen Rotationsgeschwindigkeit $\omega$ rotierbar ist, wobei die Rotationsgeschwindigkeit $\omega$ direkt mit dem durch das Ventil (310) fliessenden Massenstrom $\dot{m}$ korreliert ist.

14. Vorrichtung nach einem der Ansprüche 11 bis 14, **dadurch gekennzeichnet, dass** das Ventil (310) einen Schlagmechanismus aufweist, womit mit einer variablen Schlagfrequenz $F$ gegen das bereits geöffnete Ventil geschlagen werden kann und die Schlagfrequenz $F$ direkt mit dem durch das Ventil (310) fliessenden Massenstrom $\dot{m}$ korreliert ist.

**Claims**

1. Method of filling a target container (100) with a predetermined target mass $m_z$ of a free-flowing substance from a reservoir (200) by means of a dosage-dispensing device (300) serving to fill measured doses of said substance into the target container (100), said dosage-dispensing device (300) comprising a valve (310) which allows a variable setting of the mass flow rate $\dot{m}$ of the substance flowing from the reservoir (200) into the target container (100), a time-keeping device (400) to determine the elapsed time $t$ from the beginning of the filling process, a balance (500) to determine the mass $m$ of the substance that is present in the target container (100), and a controller unit (600) to control the valve (310), wherein the controller unit (600) includes an adjusting module (620) and a desired mass flow rate $\dot{m}.$ is stored in said adjusting module (620), wherein further, if at a time $t$ the mass flow rate $\dot{m}(t)$ is found to be smaller than the desired mass flow rate $\dot{m}.$, the mass flow rate is increased by a flow rate adjustment $d\dot{m}$, and if the mass flow rate $\dot{m}(t)$ is found to be larger than the desired mass flow rate $\dot{m}.$, the mass flow rate is decreased by a flow rate adjustment $d\dot{m}$, wherein the mass flow adjustment $d\dot{m}$ is formed by the difference between the desired

   mass flow rate $\dot{m}_*$ and an estimated mass flow rate $\hat{\dot{m}}(t)$ and the target mass $m_z$ has to be within a tolerance $m_T$,

   **characterized in that** the controller unit (600) comprises an adaptive filter for the determination of the mass flow rate $\dot{m}(t)$ and there is a delay interval $\tau$ between the time when a mass arrives on the balance and the time when a result output for said mass is available, that the desired mass flow rate $\dot{m}_*$ is selected so that the desired mass flow rate $\dot{m}_*$ is in inverse proportion to the delay interval $\tau$, and that the desired mass flow rate $\dot{m}_*$ is in direct proportion to the tolerance $m_T$.

2. Method according to claim 1, **characterized in that** the adaptive filter comprises a Recursive Least Square (RLS) filter.

3. Method according to claim 1, **characterized in that** the adaptive filter comprises a Least Mean Square (LSM) filter.

4. Method according to one of the preceding claims, **characterized in that** the adjustment module (620) is used repeatedly at equal time intervals.

5. Method according to one of the preceding claims, **characterized in that** for the determination of the new mass flow rate $\dot{m}_{new}$ the previous mass flow rate $\dot{m}_{old}$ enters into said determination in accordance with the equation $\dot{m}_{new} = (1 - \alpha)\dot{m}_{old} + \alpha(\dot{m}_{old} \pm d\dot{m})$, wherein $\alpha$ is a weight factor which can take on any desired value between zero and one.

6. Method according to one of the preceding claims, **characterized in that** the valve (310) comprises a housing (311), an outlet orifice (312) with a circular aperture cross-section, and a shutter element (313), wherein the outlet orifice (312) and the shutter element (313) are arranged on a common axis and the shutter element (313) possesses the mobility relative to the housing to rotate about the common axis and to slide in translatory movement along the common axis, the shutter element (313) slides out of, and back into, the outlet orifice (312), wherein further the shutter element (313) has a cylindrical shutter portion (314) and an outlet passage portion (315), and the valve (310) is opened and closed by a translatory movement (340) of the shutter element (313).

7. Method according to claim 6, **characterized in that** the magnitude of the mass flow rate $\dot{m}(t)$ stands in direct correlation to the translatory displacement of the shutter element (313).

8. Method according to one of the claims 6 or 7, **characterized in that** the valve (310) is opened and closed with stepwise translatory movements of equal length $\Delta L$ of the shutter element (313).

9. Method according to one of the claims 6, 7 or 8, **characterized in that** during the filling process the minimum translatory displacement $L$ of the shutter element ((313) is determined at which the substance begins to flow and that this parameter $L$ is stored in memory and used by the controller unit (600) for the control of the mass flow rate $\dot{m}(t)$ in subsequent filling processes.

10. Apparatus operable to fill a target container (100) with a predetermined target mass $m_z$ of a free-flowing substance from a reservoir (200) by means of a dosage-dispensing device (300) serving to fill measured doses of said substance into the target container (100), said dosage-dispensing device (300) comprising a valve (310) which allows a variable setting of the mass flow rate $\dot{m}$ of the substance flowing from the reservoir (200) into the target container (100), a time-keeping device (400) to determine the elapsed time $t$ from the beginning of the filling process, a balance (500) to determine the mass $m$ of the substance that is present in the target container (100), and a controller unit (600) to control the valve (310), wherein the controller unit (600) includes an adjusting module (620) and a desired mass flow rate $\dot{m}_*$ is stored in said adjusting module (620), wherein further, if at a time $t$ the mass flow rate $\dot{m}(t)$ is found to be smaller than the desired mass flow rate $\dot{m}_*$, the mass flow rate can be increased by a flow rate adjustment $d\dot{m}$, and if the mass flow rate $\dot{m}(t)$ is found to be larger than the desired mass flow rate $\dot{m}_*$, the mass flow rate can be decreased by a flow rate adjustment $d\dot{m}$, **characterized in that** the controller unit (600) comprises an adaptive filter for the determination of the mass flow rate $\dot{m}(t)$ and there is a delay interval $\tau$ between the time when a mass arrives on the balance and the time when a result output for said mass is available, that the desired mass flow rate $\dot{m}_*$ is selected so that the desired mass flow rate $\dot{m}_*$ is in inverse proportion to the delay interval $\tau$, and that the desired mass flow rate $\dot{m}_*$ is in direct proportion to the tolerance $m_T$.

11. Apparatus according to claim 10, **characterized in that** the valve (310) comprises a housing (311) and an outlet orifice (312) with a circular cross-section and a shutter element (313), wherein the outlet orifice (312) and the shutter element (313) are arranged on a common axis and the shutter element (313) possesses the mobility relative to the housing to rotate about the common axis and to slide in translatory movement along the common axis, that the shutter element (313) can be slid out of, and back into, the outlet orifice (312), and that the shutter element (313) has a cylindrical shutter portion (314) and an outlet passage portion (315), wherein the valve (310) is opened and closed by a translatory movement (340) of the shutter element (313).

12. Apparatus according to claim 11, **characterized in that** the outlet passage portion of the shutter element (315) has a variable aperture cross-section $A$ and that the translatory displacement of the shutter element (313) correlates directly to the aperture cross-section A of the valve (310).

13. Apparatus according to one of the claims 10 to 12, **characterized in that** the shutter element (313) is rotatable with a variable angular velocity $\omega$, wherein said angular velocity $\omega$ stands in direct correlation to the mass flow rate $\dot{m}$ of the stream of substance passing through the valve (310).

**14.** Apparatus according to one of the claims 10 to 13, **characterized in that** the valve (310) comprises an impact mechanism whereby taps of a variable tapping frequency $F$ can be directed against the already open valve, and that the tapping frequency $F$ correlates directly to the mass flow rate $\dot{m}$ of the stream of substance passing through the valve (310).

**Revendications**

**1.** Procédé pour remplir un récipient cible (100) avec une masse cible $m_z$ prédéfinie d'une substance fluide provenant d'un réservoir (200) à l'aide d'un dispositif de dosage (300) pour le versement dosé de la substance dans le récipient cible (100) avec une vanne (310), qui permet un réglage variable du flux massique $\dot{m}$ provenant du réservoir (200) dans le récipient cible (100), un enregistrement de temps (400) pour la détermination du temps $t$ écoulé depuis le début de l'opération de remplissage, une balance (500) pour la détermination de la masse de la substance $m$ se trouvant dans le récipient cible (100) et une unité de commande (600) pour la commande de la vanne (310), l'unité de commande (600) présentant un module de correction (620), un flux massique $\dot{m}$ souhaité étant déposé dans le module de correction (620) et si, pour l'instant $t$, le flux massique $m(t)$ est inférieur au flux massique $\dot{m}$ souhaité, le flux massique est augmenté d'une variation du flux massique $d\dot{m}$ et si le flux massique $\dot{m}(t)$ est supérieur au flux massique $\dot{m}$ souhaité, le flux massique est réduit d'une variation de flux massique $d\dot{m}$, la variation du flux massique $dm$ étant formée à partir de la différence entre le flux massique $\dot{m}$ souhaité et le flux massique $\dot{m}(t)$ estimé et la masse cible $m_z$ devant se trouver dans les limites d'une tolérance $m_T$, **caractérisé en ce que** l'unité de commande (600) présente un filtre adaptatif pour la détermination du flux massique $\dot{m}(t)$ et un temps mort $\tau$ étant présent entre l'application d'une masse et l'édition de cette masse et le flux massique souhaité $\dot{m}$ étant choisi de telle sorte que le flux massique souhaité $\dot{m}$ se comporte de façon antiproportionnelle par rapport au point mort $\tau$ et le flux massique souhaité $\dot{m}$ se comportant de façon proportionnelle à la tolérance $m_T$.

**2.** Procédé selon la revendication 1, **caractérisé en ce que** le filtre adaptatif présente un filtre Recursive Least Square (RLS).

**3.** Procédé selon la revendication 1, **caractérisé en ce que** le filtre adaptatif présente un filtre Least Mean Square (LSM).

**4.** Procédé selon l'une des revendications précédentes, **caractérisé en ce que** le module de correction (620) est utilisé de façon répétée après des incréments de temps identiques.

**5.** Procédé selon l'une des revendications précédentes, **caractérisé en ce que** l'ancien flux massique $\dot{m}_{ancien}$ est intégré dans la détermination du nouveau flux massique $\dot{m}_{nouveau}$ selon la relation $\dot{m}_{nouveau} = (1-a)\dot{m}_{ancien} + a(\dot{m}_{ancien} \pm d\dot{m})$, a étant un facteur de pondération qui peut prendre une valeur quelconque entre zéro et un.

**6.** Procédé selon l'une des revendications précédentes, **caractérisé en ce que** la vanne (310) présente un boîtier (311) et une ouverture de sortie (312) dotée d'une section circulaire et un élément de fermeture (313), l'ouverture de sortie (312) et l'élément de fermeture (313) étant disposés sur un axe commun et l'élément de fermeture (313) pouvant tourner par rapport au boîtier (311) autour de l'axe commun et pouvant coulisser par translation le long de l'axe commun, étant sortis de l'ouverture de sortie (312) et entrés dans celle-ci et l'élément de fermeture (313) présentant une zone de fermeture (314) de forme cylindrique et une zone d'évacuation (315), la vanne (310) étant ouverte et fermée par translation (340) de l'élément de fermeture (313).

**7.** Procédé selon la revendication 6, **caractérisé en ce que** la grandeur du flux massique $\dot{m}(t)$ est en corrélation directe avec la translation de l'élément de fermeture (313).

**8.** Procédé selon l'une des revendications 7 ou 8, **caractérisé en ce que** la vanne (310) est ouverte et fermée à l'aide de mouvements de translation $\Delta L$ progressifs et identiques de l'élément de fermeture (313).

**9.** Procédé selon l'une des revendications 7, 8 ou 9, **caractérisé en ce que**, lors de l'opération de remplissage, la translation $L$ minimale de l'élément de fermeture (313), lors de laquelle la substance commence à couler, est déterminée et ce paramètre $L$ est sauvegardé et utilisé lors d'opérations de remplissage consécutives par l'unité de commande (600) pour la commande du flux massique $\dot{m}(t)$.

**10.** Dispositif pour remplir un récipient cible (100) avec une masse cible $m_z$ prédéfinie d'une substance fluide provenant d'un réservoir (200) avec un dispositif de dosage (300) pour le versement dosé de la substance dans le récipient cible (100) avec une vanne (310), qui permet un réglage variable du flux massique $\dot{m}$ provenant du réservoir (200) dans le récipient cible (100), un enregistrement de temps (400) pour la détermination du temps $t$ écoulé depuis le début de l'opération de remplissage, une balance (500) pour la détermination de la masse de la substance $m$ se trouvant dans le récipient cible (100) et une unité de commande (600) pour la commande de la vanne (310) et l'unité de commande (600) présentant un module de correction (620), un flux massique $\dot{m}$. souhaité étant déposé dans le module de correction (620) et si, pour l'instant $t$, le flux massique $\dot{m}(t)$ est inférieur au flux massique souhaité $\dot{m}$., le flux massique peut être augmenté d'une variation du flux massique $d\dot{m}$ et si le flux massique $\dot{m}(t)$ est supérieur au flux massique $\dot{m}$. souhaité, le flux massique peut être réduit d'une variation du flux massique $d\dot{m}$., **caractérisé en ce que** l'unité de commande (600) présente un filtre adaptatif pour la détermination de flux massique $\dot{m}(t)$ et un temps mort $\tau$ existe entre l'application d'une masse et la sortie de cette masse et le flux massique souhaité $\dot{m}$. est choisi de telle sorte que le flux massique $\dot{m}$. souhaité se comporte de façon antiproportionnelle par rapport au temps mort $\tau$ et le flux massique $\dot{m}$. souhaité se comporte de façon proportionnelle à la tolérance $m_T$.

**11.** Dispositif selon la revendication 11, **caractérisé en ce que** la vanne (310) présente un boîtier (311) et une ouverture de sortie (312) dotée d'une section circulaire et un élément de fermeture (313), l'ouverture de sortie (312) et l'élément de fermeture (313) étant disposés sur un axe commun et l'élément de fermeture (313) pouvant tourner par rapport au boîtier (311) autour de l'axe commun et pouvant sortir le long de l'axe commun, avec un coulissement de translation, de l'ouverture de sortie (312) ou entrer dans l'ouverture de sortie (312) et l'élément de fermeture (313) présentant une zone de fermeture (314) cylindrique et une zone d'évacuation (315), la vanne pouvant être ouverte ou fermée par translation de l'élément de fermeture (313).

**12.** Dispositif selon la revendication 12, **caractérisé en ce que** la zone d'évacuation de l'élément de fermeture (315) présente une section d'ouverture A variable et la translation de l'élément de fermeture (313) est en corrélation directe avec la section d'ouverture A de la vanne (310).

**13.** Dispositif selon l'une des revendications 11 à 13, **caractérisé en ce que** l'élément de fermeture (313) peut tourner avec une vitesse de rotation variable $\omega$), la vitesse de rotation $\omega$ étant en corrélation directe avec le flux massique $\dot{m}$ circulant à travers la vanne (310).

**14.** Dispositif selon l'une des revendications 11 à 14, **caractérisé en ce que** la vanne (310) présente un mécanisme de frappe, sachant qu'on peut frapper contre la vanne déjà ouverte avec une fréquence de frappe $F$ variable et que la fréquence de frappe $F$ est en corrélation directe avec le flux massique $\dot{m}$ circulant à travers la vanne (310).

Figur 1

Figur 2

Figur 3

EP 2 372 321 B1

Figur 4

EP 2 372 321 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4893262 A
- US 6987228 B1
- US 4762252 A
- EP 2124025 A1
- EP 2159555 A1